# DEMANDE DE BREVET EUROPEEN

(11) **EP 4 749 880 A1**
(43) Date de publication de la demande: **27.05.2026**
(21) Numéro de dépôt: 25217255.6
(22) Date de dépôt: 20.11.2025
(51) Int. Cl.: H02J 7/34, F41F 3/04

(54) **SYSTÈME DE COMMANDE POUR LANCE-ROQUETTE COMPRENANT UNE UNITÉ DE STOCKAGE COMPORTANT UN OU PLUSIEURS SUPERCONDENSATEURS**

(30) Priorité: 20.11.2024 FR 2412683
(71) Demandeur: THALES, 92190 Meudon (FR)
(72) Inventeur: TOCQUE, William, Lucien, Jean, 45240 LA FERTE SAINT-AUBIN (FR); MONCOUYOUX, Guillaume, 45240 LA FERTE SAINT-AUBIN (FR); BILLANT, Loïck, Alexandre, 45240 LA FERTE SAINT-AUBIN (FR); FOSCHIATTI, Thibaut, Alban, 45240 LA FERTE SAINT-AUBIN (FR)
(74) Mandataire: Lavoix

(57) **Abrégé**

Système de commande (16) pour lance-roquette (12), comprenant :
- une interface homme-machine (20) permettant de saisir des paramètres de tir et comprenant une batterie électrique intégrée (26),
- un dispositif de commande (22) pour recevoir les paramètres de tir, et un courant électrique entrant (34) en provenance de la batterie électrique intégrée, le dispositif de commande comprenant : une unité de régulation (38) pour produire un courant électrique à stocker (40) ; une unité de stockage (42) comportant un ou plusieurs supercondensateurs (44) pour recevoir le courant électrique à stocker dans le ou les supercondensateurs et pour produire un courant électrique de déstockage (46) ; une unité de conditionnement (48) pour recevoir le courant électrique de déstockage et pour produire un courant électrique de sortie (36) destiné à être envoyé au lance-roquette.

## Description

### DOMAINE

La présente invention concerne un système de commande pour lance-roquette, comprenant un dispositif de commande, ou pupitre, adapté pour recevoir des paramètres de tir et pour envoyer un signal de lancement au lance-roquette.

L'invention concerne également un ensemble comprenant un lance-roquette et un tel système de commande, et un procédé correspondant.

### ART ANTERIEUR

Un lance-roquette et son système de commande sont des dispositifs mobiles qu'on souhaite les plus légers et fiables possible, et faciles à déployer. En outre, pour ces dispositifs, il est en général demandé une autonomie en énergie de plusieurs heures, et la possibilité de tirer plusieurs salves, qui supposent des recharges en énergie.

Certains types de lance-roquette nécessitent une puissance électrique élevée, même si c'est pendant un court laps de temps, par exemple si la mise à feu des roquettes est déclenchée par un système à induction. Cette puissance est en général fournie par une batterie, par exemple sous la forme d'un courant de 5 A sous une tension de 28 V.

Néanmoins, une telle batterie est lourde, encombrante et difficilement transportable, notamment en raison de la réglementation des transports par aéronefs. De plus, l'utilisation d'une telle batterie suppose une gestion prévisionnelle de son niveau de charge à l'aide d'outillages dédiés, et une diminution éventuelle de sa capacité en cas de températures basses, donc un certain surdimensionnement de la batterie. En outre, le vieillissement de la batterie, qu'elle soit utilisée ou non, induit une dégradation de ses performances, qu'il faut suivre et anticiper. La batterie est ensuite démantelée et recyclée. Tout ceci va à l'encontre des objectifs précités et complexifie la gestion du lance-roquette.

Une solution théoriquement possible serait d'alimenter le lance-roquette à l'aide d'un régulateur de tension connecté à un réseau électrique. Toutefois, ceci nécessiterait d'être à proximité d'une prise de ce réseau. Le lance-roquette ne serait alors plus autonome et sa fiabilité dépendrait du bon fonctionnement du réseau électrique, qui ne peut être garanti sur un théâtre d'opérations.

Un but de l'invention est de palier tout ou partie des inconvénients précités, en fournissant un système de commande préservant l'autonomie du lance-roquette et contribuant à sa facilité d'utilisation.

### RESUME DE L'INVENTION

A cet effet, l'invention a pour objet un système de commande pour lance-roquette, comprenant :
- une interface homme-machine permettant de saisir des paramètres de tir, et comprenant une batterie électrique intégrée, et
- un dispositif de commande adapté pour être relié électriquement à l'interface homme-machine pour recevoir les paramètres de tir, et pour recevoir un courant électrique entrant en provenance de la batterie électrique intégrée, le dispositif de commande comprenant : une unité de régulation adaptée pour recevoir et réguler le courant électrique entrant et pour produire un courant électrique à stocker ; une unité de stockage comportant un ou plusieurs supercondensateurs et adaptée pour recevoir le courant électrique à stocker dans le ou les supercondensateurs et pour produire un courant électrique de déstockage à partir du ou des supercondensateurs ; une unité de conditionnement adaptée pour recevoir le courant électrique de déstockage et pour produire un courant électrique de sortie destiné à être envoyé au lance-roquette.

Suivant d'autres aspects avantageux de l'invention, le système de commande comprend une ou plusieurs des caractéristiques suivantes, prise(s) isolément ou suivant toutes les combinaisons techniquement possibles :
- l'interface homme-machine est une tablette tactile, un ordinateur portable ou un smartphone ;
- l'interface homme-machine est mobile entre une position fixée, dans laquelle l'interface homme-machine est fixée sur le dispositif de commande, et une position déportée, dans laquelle l'interface homme-machine est à l'écart du dispositif de commande ;
- l'interface homme-machine comprend au moins un port de communication et le dispositif de commande comprend au moins un port de communication destiné à être relié électriquement au port de communication de l'interface homme-machine, les ports de communication étant de type USB, de préférence selon l'une des normes USB 3.0 et suivantes ;
- l'unité de stockage comprend un nombre de supercondensateurs supérieur ou égal à 4 et inférieur ou égal à 12, chacun des supercondensateurs ayant une capacité comprise entre 0,6 et 1,8 F ;
- l'unité de régulation comprend : un premier module de gestion adapté pour recevoir le courant électrique entrant à une tension d'entrée et pour piloter l'alimentation du dispositif de commande par le courant électrique entrant ; un module de régulation de tension adapté pour recevoir le courant électrique entrant et pour produire un courant électrique intermédiaire ayant une tension intermédiaire supérieure à la tension d'entrée ; et un deuxième module de gestion adapté pour recevoir le courant électrique intermédiaire et pour produire le courant électrique à stocker à une intensité électrique de stockage, le deuxième module de gestion étant configuré pour limiter l'intensité électrique de stockage de manière à éviter un écroulement de la tension d'entrée ;
- le système de commande est adapté pour que : la tension d'entrée soit comprise entre 4,5 et 5,5 V ; la tension intermédiaire soit comprise entre 15 V et 25 V ; et/ou la tension de sortie soit comprise entre 26 V et 30 V ;
- l'unité de stockage et l'unité de conditionnement sont adaptées pour délivrer respectivement le courant électrique de déstockage et le courant électrique de sortie à une puissance supérieure à 100 W, de préférence supérieure à 135 W, pendant au moins 50 ms, de préférence au moins 100 ms ;
- l'unité de stockage et l'unité de conditionnement sont adaptées pour délivrer respectivement le courant électrique de déstockage et le courant électrique de sortie à ladite puissance pendant quatre à dix intervalles de temps sans nécessiter une recharge de l'unité de stockage, chacun des intervalles de temps ayant une durée d'au moins 50 ms, de préférence au moins 100 ms ; et
- l'interface homme-machine comprend au moins un port de communication et le dispositif de commande comprend au moins un port de communication destiné à être relié électriquement au port de communication de l'interface homme-machine, les ports de communication étant de type USB, le système de commande comprenant de préférence un câble reliant électriquement l'interface homme-machine au dispositif de commande et permettant d'alimenter le dispositif de commande à une puissance nominale d'environ 15W.

L'invention a aussi pour objet un ensemble comprenant :
- un système de commande tel que décrit ci-dessus,
- un lance-roquette adapté pour réaliser un lancement d'au moins une roquette, et
- un câble adapté pour relier électriquement le système de commande au lance-roquette, le lance-roquette étant adapté pour recevoir le courant électrique de sortie à une puissance de sortie, et pour qu'au moins une partie de la puissance de sortie soit utilisée pour déclencher ledit lancement.

L'invention a aussi pour objet un procédé de commande d'un lance-roquette, comprenant les étapes suivantes :
- obtention d'un système de commande tel que décrit ci-dessus ou d'un ensemble tel que décrit ci-dessus, l'interface homme-machine et le dispositif de commande étant reliés électriquement l'un à l'autre,
- saisie de paramètres de tir à l'aide de l'interface homme-machine,
- réception, par le dispositif de commande, des paramètres de tir,
- réception, par le dispositif de commande, du courant électrique entrant en provenance de la batterie électrique intégrée,
- réception et régulation du courant électrique entrant par l'unité de régulation, et production du courant électrique à stocker,
- réception du courant électrique à stocker par l'unité de stockage,
- production, par l'unité de stockage, du courant électrique de déstockage;
- réception, par l'unité de conditionnement, du courant électrique de déstockage, et production du courant électrique de sortie, et
- envoi du courant électrique de sortie au lance-roquette.

### BREVE DESCRIPTION DES DESSINS

L'invention apparaîtra plus clairement à la lecture de la description qui va suivre, donnée uniquement à titre d'exemple non limitatif, et faite en référence aux dessins annexés, dans lesquels :
- la figure 1 est une vue schématique de côté montrant un ensemble selon l'invention ; et
- la figure 2 est un schéma-bloc de l'ensemble représenté sur la figure 1.

### DESCRIPTION DETAILLEE

### Ensemble

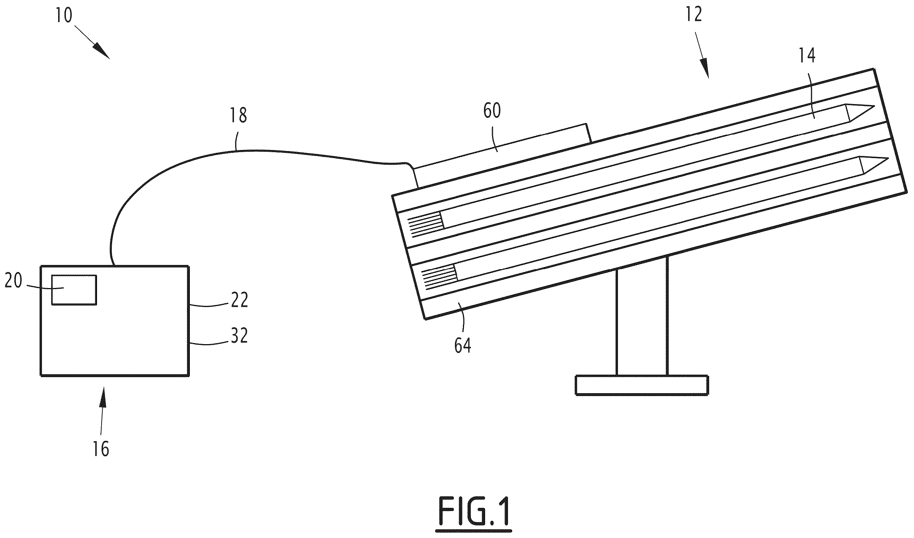

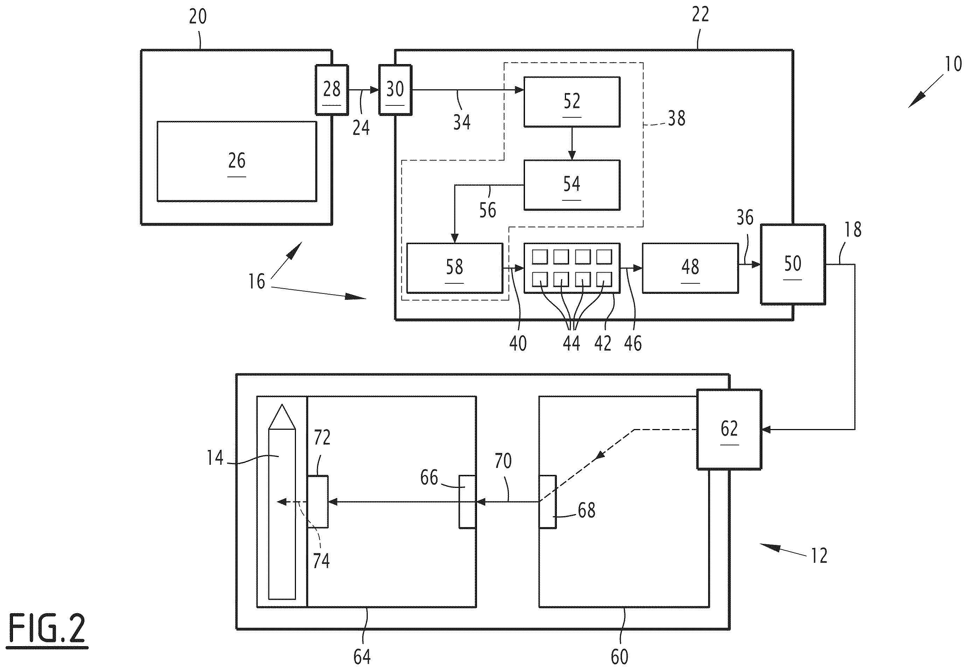

En référence aux figures 1 et 2, on décrit un ensemble 10 selon l'invention, présenté en conditions d'utilisation.

L'ensemble 10 comprend un lance-roquette 12 adapté pour réaliser un lancement d'au moins une roquette 14, un système de commande 16, encore appelé pupitre de commande, et au moins un câble 18 reliant électriquement le système de commande au lance-roquette.

Le câble 18 mesure par exemple entre 15 et 30 mètres.

### Système de commande

Le système de commande 16 comprend une interface homme-machine 20 permettant notamment de saisir des paramètres de tir, et un dispositif de commande 22 adapté pour être relié électriquement à l'interface homme-machine, notamment pour recevoir les paramètres de tir.

Dans l'exemple, le système de commande 16 comprend un câble 24 reliant électriquement l'interface homme-machine 20 au dispositif de commande 22.

### Interface homme-machine

L'interface homme-machine 20 est avantageusement une tablette tactile, un ordinateur portable ou un téléphone mobile intelligent (ou « smartphone »), et permet par exemple de lire, modifier et/ou valider les paramètres de tir destinés au lance-roquette 12.

L'interface homme-machine 20 comprend une batterie électrique intégrée 26, et avantageusement un port de communication 28 adapté pour être relié électriquement à un port de communication 30 du dispositif de commande 22.

L'interface homme-machine 20 est avantageusement mobile entre une position fixée (représentée sur la figure 1), dans laquelle l'interface homme-machine est fixée sur le dispositif de commande 22, par exemple sur un boîtier 32 du dispositif de commande, et une position déportée (figure 2), dans laquelle l'interface homme-machine est à l'écart du dispositif de commande. Dit autrement, l'interface homme-machine 20 est avantageusement amovible par rapport au dispositif de commande 22.

Les ports de communication 28, 30 sont avantageusement de type USB, de préférence selon l'une des normes USB 3.0 et suivantes. Les ports de communication 28, 30 et le câble 24 sont donc par exemple de type USB-C.

Ainsi, le câble 24 permet d'alimenter le dispositif de commande 22 à une puissance nominale relativement faible, par exemple environ 15 W.

La batterie électrique intégrée 26 est par exemple une batterie lithium-ion.

La batterie électrique 26 intégrée a par exemple une capacité comprise entre 4000 mAh et 12000 mAh (milliampère-heure).

### Dispositif de commande

Le dispositif de commande 22 est adapté pour recevoir un courant électrique entrant 34 en provenance de la batterie intégrée, et pour générer un courant électrique de sortie 36 envoyé au lance-roquette 12.

Le dispositif de commande 22 comprend avantageusement une carte électronique (non représentée) pour gérer notamment les paramètres de tir, et est adapté pour alimenter cette carte, par exemple à partir du courant électrique entrant 34. Toutefois, les fonctions de commande du dispositif de commande 22 ne seront pas décrites en détail, étant classiques en elles-mêmes. Seuls les aspects liés à la gestion de la puissance électrique envoyée vers le lance-roquette 12 seront décrits ci-après.

Le dispositif de commande 22 comprend une unité de régulation 38 adaptée pour recevoir et réguler le courant électrique entrant 34 et pour produire un courant électrique à stocker 40. Le dispositif de commande 22 comprend une unité de stockage 42 comportant un ou plusieurs supercondensateurs 44 et adaptée pour recevoir le courant électrique à stocker 40 dans le ou les supercondensateurs et pour produire un courant électrique de déstockage 46 à partir du ou des supercondensateurs. Le dispositif de commande 22 comprend une unité de conditionnement 48 adaptée pour recevoir le courant électrique de déstockage 46 et pour produire le courant électrique de sortie 36.

Le dispositif de commande 22 comprend par exemple un connecteur 50 relié électriquement à l'unité de conditionnement 48 et adapté pour recevoir le câble 18 pour envoyer le courant électrique de sortie 36 vers le lance-roquette 12.

L'unité de stockage 42 est avantageusement adaptée pour délivrer le courant électrique de déstockage 46 à une puissance supérieure à 100 W, de préférence supérieure à 135 W, pendant au moins 50 ms, de préférence au moins 100 ms.

L'unité de stockage 42 comprend avantageusement un nombre de supercondensateurs 44 supérieur ou égal à 4 et inférieur ou égal à 12, par exemple environ 8.

L'unité de stockage 42 permet avantageusement de fournir ladite puissance nécessaire à plusieurs reprises et à intervalle de temps faible compris entre 100 ms et 300 ms.

Par exemple, l'unité de stockage 42 est adaptée pour délivrer le courant électrique de déstockage 46 à ladite puissance pendant quatre à dix intervalles de temps sans nécessiter une recharge, chacun des intervalles de temps ayant une durée d'au moins 50 ms, de préférence au moins 100 ms.

Chacun des supercondensateurs 44 a avantageusement une capacité comprise entre 0,6 et 1,8 **F,** par exemple environ 1,2 F.

Les supercondensateurs 44 sont par exemple montés en série et/ou en parallèle les uns des autres.

Par « supercondensateur » (en anglais « *supercapacity* »), on entend par exemple un condensateur ayant une densité de puissance d'au moins 1000 W/kg. Les supercondensateurs sont connus en eux-mêmes et ne seront pas décrits plus en détail.

L'unité de régulation 38 comprend avantageusement un premier module de gestion 52 adapté pour recevoir le courant électrique entrant 34 à une tension d'entrée et pour piloter l'alimentation du dispositif de commande 22 par le courant électrique entrant. L'unité de régulation 38 comprend avantageusement un module de régulation de tension 54 adapté pour recevoir le courant électrique entrant 34 et pour produire un courant électrique intermédiaire 56 ayant une tension intermédiaire supérieure à la tension d'entrée.

L'unité de régulation 38 comprend avantageusement un deuxième module de gestion 58 adapté pour recevoir le courant électrique intermédiaire 56 et pour produire le courant électrique de stockage 40 à une intensité électrique de stockage, le deuxième module de gestion étant configuré pour limiter l'intensité électrique de stockage de manière à éviter un écroulement de la tension d'entrée.

L'unité de régulation 38 est par exemple adaptée pour que :
- la tension d'entrée soit comprise entre 4,5 et 5,5 V, de préférence environ 5,0 V, et/ou
- la tension intermédiaire soit comprise entre 15 V et 25 V, de préférence environ 24 V.

L'unité de conditionnement 48 est avantageusement adaptée pour que la tension de sortie soit comprise entre 26 V et 30 V, par exemple environ 28 V.

L'unité de conditionnement 48 est avantageusement adaptée pour délivrer le courant électrique de sortie 36 à une puissance supérieure à 100 W, de préférence supérieure à 135 W, par exemple environ 140 W, pendant au moins 50 ms, de préférence au moins 100 ms.

Avantageusement, l'unité de conditionnement 48 est adaptée pour délivrer le courant électrique de sortie 36 à ladite puissance pendant quatre à dix intervalles de temps sans nécessiter une recharge de l'unité de stockage 42, chacun des intervalles de temps ayant une durée d'au moins 50 ms, de préférence au moins 100 ms.

### Lance-roquette

Le lance-roquette 12 est connu en lui-même et ne sera pas décrit en grand détail.

Le lance-roquette 12 est adapté pour recevoir le courant électrique de sortie 36 à une puissance de sortie, et pour qu'au moins une partie de la puissance de sortie soit utilisée pour déclencher le lancement de la roquette 14.

Le lance-roquette 12 comprend par exemple un boîtier d'interface 60 équipé d'un connecteur 62 adapté pour recevoir le câble 18, et un lanceur 64 avantageusement équipé d'un connecteur 66 relié électriquement à un connecteur 68 du boîtier d'interface.

Le boîtier d'interface 60 est adapté pour recevoir des ordres de commande, par exemple en parallèle du courant électrique de sortie 36 via le câble 18, et pour délivrer un signal analogique de puissance 70.

En variante (non représentée), les ordres de commande parviennent au lance-roquette 12 d'une autre manière connue en elle-même (par exemple via un autre câble non représenté).

Le boîtier d'interface 60 assure typiquement des fonctions d'autorisation de tir, de sélection de voie (dans le cas d'un lance-roquette permettant de lancer plusieurs roquettes), et de codage du signal de puissance 70.

Le lanceur 64 est par exemple à induction, c'est-à-dire qu'il comprend une ou plusieurs bobines 72 adaptées pour envoyer un signal 74 de mise à feu de la roquette 14.

La roquette 14 est donc dans l'exemple une roquette à induction.

### Fonctionnement

Le fonctionnement de l'ensemble 10 découle de sa structure et va maintenant être brièvement décrit pour illustrer un procédé selon l'invention.

L'interface homme machine 20 est connectée électriquement au dispositif de commande 22 par le câble 24. Le dispositif de commande 22 est connecté électriquement au lance-roquette 12 par le câble 18. Le lance-roquette 12 est chargé d'au moins la roquette 14.

Un opérateur (non représenté) saisit des paramètres de tir à l'aide de l'interface homme-machine 20. Le dispositif de commande 22 reçoit les paramètres de tir, et le courant électrique entrant 34 en provenance de la batterie intégrée 26. La batterie intégrée 26 a avantageusement été suffisamment chargée au préalable.

Le courant électrique entrant 34 est reçu par l'unité de régulation 38, qui produit le courant électrique à stocker 40, qui est stocké par l'unité de stockage 42 (sous la forme d'une quantité d'électricité dans le ou les supercondensateurs 44).

Au moment d'un tir, l'unité de stockage 42 produit le courant électrique de déstockage 46, qui est reçu et conditionné par l'unité de conditionnement 48 pour produire le courant électrique de sortie 36.

Le courant électrique de sortie 36 est envoyé au lance-roquette 12. Au moins une partie de la puissance de sortie est par exemple utilisée pour déclencher le lancement de la roquette 14.

Eventuellement, l'unité de stockage 42 est rechargée électriquement de la même manière que précédemment, et un autre tir peut être envisagé.

Avantageusement, l'unité de stockage 42 et l'unité de conditionnement 48 permettent de tirer entre quatre et dix roquettes sans recharge (ou sans recharge significative) de l'unité de stockage. Le système de commande 16 permet ainsi d'envisager un autre tir du lance-roquette 12 sans attendre un rechargement complet de l'unité de stockage 42. Ceci augmente l'autonomie du système de commande 16.

### Avantages

Grâce aux caractéristiques décrites ci-dessus, le système de commande 16 préserve l'autonomie du lance-roquette 12, et contribue à sa facilité d'utilisation. En effet, aucune batterie auxiliaire lourde et encombrante, ni aucun réseau électrique local ne sont avantageusement utilisés pour fournir la puissance électrique mise en œuvre pour déclencher la mise à feu de la roquette 14.

L'ensemble 10 reste mobile, léger, facilement déployable, autonome sur plusieurs heures et avec la possibilité d'effectuer plusieurs salves de tir avec des temps de charge faibles entre les salves.

Les principaux avantages du système de commande 16 sont :
- de fortement gagner en mobilité, car aucune batterie externe lourde n'est utilisée, uniquement par exemple une tablette tactile légère avec sa propre batterie intégrée,
- de ne pas dépendre d'une source d'énergie extérieure au pupitre (véhicule, batterie externe lourde),
- une facilité d'utilisation pour l'opérateur, par un simple branchement du câble 24, par exemple USB-C, sur la tablette, puis entre le dispositif de commande 22 et le lance-roquette 12 pour pouvoir réaliser des mises à feu,
- d'éviter les problèmes logistiques de transport de batteries de hautes capacités.

L'unité de régulation 38 permet avantageusement d'élever la tension de celle du courant électrique entrant 34, jusqu'à celle du courant électrique à stocker 40, par exemple de 5 V à 24 V.

L'unité de conditionnement 48 permet avantageusement d'élever la tension depuis celle du courant électrique de déstockage 46 jusqu'à celle du courant électrique de sortie 36, par exemple de 20 V à 28V, ce qui permet de réduire les pertes d'énergie, et d'utiliser le lance-roquette 12 sans alimentation par une batterie à 28 V et 5 A par exemple.

Le ou les supercondensateurs 44 a/ont pour avantage une forte densité de puissance et sont peu sensible aux variations de température. De plus, les supercondensateurs 44 supportent facilement les cycles de charge-décharge et permettent des décharges profondes. Les supercondensateurs 44 sont plus légers qu'une batterie classique et possèdent une durée de vie supérieure à celle d'une batterie classique.

## Revendications

1. Système de commande (16) pour lance-roquette (12), comprenant :
- une interface homme-machine (20) permettant de saisir des paramètres de tir, et comprenant une batterie électrique intégrée (26), et
- un dispositif de commande (22) adapté pour être relié électriquement à l'interface homme-machine (20) pour recevoir les paramètres de tir, et pour recevoir un courant électrique entrant (34) en provenance de la batterie électrique intégrée (26), le dispositif de commande (22) comprenant : une unité de régulation (38) adaptée pour recevoir et réguler le courant électrique entrant (34) et pour produire un courant électrique à stocker (40) ; une unité de stockage (42) comportant un ou plusieurs supercondensateurs (44) et adaptée pour recevoir le courant électrique à stocker (40) dans le ou les supercondensateurs (44) et pour produire un courant électrique de déstockage (46) à partir du ou des supercondensateurs (44) ; une unité de conditionnement (48) adaptée pour recevoir le courant électrique de déstockage (46) et pour produire un courant électrique de sortie (36) destiné à être envoyé au lance-roquette (12).

2. Système de commande (16) selon la revendication 1, dans lequel l'interface homme-machine (20) est une tablette tactile, un ordinateur portable ou un smartphone.

3. Système de commande (16) selon la revendication 1 ou 2, dans lequel l'interface homme-machine (20) est mobile entre une position fixée, dans laquelle l'interface homme-machine (20) est fixée sur le dispositif de commande (22), et une position déportée, dans laquelle l'interface homme-machine (20) est à l'écart du dispositif de commande (22).

4. Système de commande (16) selon l'une quelconque des revendications 1 à 3, dans lequel l'interface homme-machine (20) comprend au moins un port de communication (28) et le dispositif de commande (22) comprend au moins un port de communication (30) destiné à être relié électriquement au port de communication (28) de l'interface homme-machine (20), les ports de communication (28, 30) étant de type USB, de préférence selon l'une des normes USB 3.0 et suivantes.

5. Système de commande (16) selon l'une quelconque des revendications 1 à 4, dans lequel l'unité de stockage (42) comprend un nombre de supercondensateurs (44) supérieur ou égal à 4 et inférieur ou égal à 12, chacun des supercondensateurs (44) ayant une capacité comprise entre 0,6 et 1,8 F.

6. Système de commande (16) selon l'une quelconque des revendications 1 à 5, dans lequel l'unité de régulation (38) comprend : un premier module de gestion (52) adapté pour recevoir le courant électrique entrant (34) à une tension d'entrée et pour piloter l'alimentation du dispositif de commande (22) par le courant électrique entrant (34); un module de régulation de tension (54) adapté pour recevoir le courant électrique entrant et pour produire un courant électrique intermédiaire (56) ayant une tension intermédiaire supérieure à la tension d'entrée ; et un deuxième module de gestion (58) adapté pour recevoir le courant électrique intermédiaire (56) et pour produire le courant électrique à stocker (40) à une intensité électrique de stockage, le deuxième module de gestion (58) étant configuré pour limiter l'intensité électrique de stockage de manière à éviter un écroulement de la tension d'entrée.

7. Système de commande (16) selon la revendication 6, adapté pour que :
- la tension d'entrée soit comprise entre 4,5 et 5,5 V,
- la tension intermédiaire soit comprise entre 15 V et 25 V, et/ou
- la tension de sortie soit comprise entre 26 V et 30 V.

8. Système de commande (16) selon l'une quelconque des revendications 1 à 7, dans lequel l'unité de stockage (42) et l'unité de conditionnement (48) sont adaptées pour délivrer respectivement le courant électrique de déstockage (46) et le courant électrique de sortie (36) à une puissance supérieure à 100 W, de préférence supérieure à 135 W, pendant au moins 50 ms, de préférence au moins 100 ms.

9. Système de commande (16) selon la revendication 8, dans lequel l'unité de stockage (42) et l'unité de conditionnement (48) sont adaptées pour délivrer respectivement le courant électrique de déstockage (46) et le courant électrique de sortie (36) à ladite puissance pendant quatre à dix intervalles de temps sans nécessiter une recharge de l'unité de stockage (42), chacun des intervalles de temps ayant une durée d'au moins 50 ms, de préférence au moins 100 ms.

10. Ensemble (10) comprenant :
- un système de commande (16) selon l'une quelconque des revendications 1 à 9,
- un lance-roquette (12) adapté pour réaliser un lancement d'au moins une roquette (14), et
- un câble (18) adapté pour relier électriquement le système de commande (16) au lance-roquette (12), le lance-roquette (12) étant adapté pour recevoir le courant électrique de sortie (36) à une puissance de sortie, et pour qu'au moins une partie de la puissance de sortie soit utilisée pour déclencher ledit lancement.

11. Procédé de commande d'un lance-roquette (12), comprenant les étapes suivantes :
- obtention d'un système de commande (16) selon l'une quelconque des revendications 1 à 9 ou d'un ensemble selon la revendication 10, l'interface homme-machine (20) et le dispositif de commande (22) étant reliés électriquement l'un à l'autre,
- saisie de paramètres de tir à l'aide de l'interface homme-machine (20),
- réception, par le dispositif de commande (22), des paramètres de tir,
- réception, par le dispositif de commande (22), du courant électrique entrant (34) en provenance de la batterie électrique intégrée (26),
- réception et régulation du courant électrique entrant (34) par l'unité de régulation (38), et production du courant électrique à stocker (40),
- réception du courant électrique à stocker (40) par l'unité de stockage (42),
- production, par l'unité de stockage (42), du courant électrique de déstockage (46),
- réception, par l'unité de conditionnement (48), du courant électrique de déstockage (46), et production du courant électrique de sortie (36), et
- envoi du courant électrique de sortie (36) au lance-roquette (12).
